# EUROPEAN PATENT SPECIFICATION

(11) **EP 1 614 030 B1**
(45) Date of publication and mention of the grant of the patent: **04.11.2015**
(21) Application number: 04724090.8
(22) Date of filing: 29.03.2004
(51) Int. Cl.: G06F 9/38, G06F 9/30

(54) **DATA PROCESSING SYSTEM WITH CLUSTERED ILP PROCESSOR**
DATENVERARBEITUNGSSYSTEM MIT EINEM GRUPPIERTEN BEFEHLSEBENEN-PARALLEL-PROZESSOR
SYSTEME DE TRAITEMENT DE DONNEES A PROCESSEUR EN GRAPPE A PARALLELISME ENTRE INSTRUCTIONS (ILP)

(30) Priority: 07.04.2003 EP 03100923
(43) Date of publication of application: 11.01.2006
(73) Proprietor: Koninklijke Philips N.V., 5656 AE Eindhoven (NL)
(72) Inventor: TERECHKO, Andrei, NL-5656 AA Eindhoven (NL)
(74) Representative: Deguelle, Wilhelmus H. G.
(86) International application number: PCT/IB2004/050351
(87) International publication number: WO 2004/090716

(56) References cited:
- WO-A-2004/059469
- US-B1- 6 446 191
- WOLFE A ET AL: "Datapath design for a VLIW video signal processor" HIGH-PERFORMANCE COMPUTER ARCHITECTURE, 1997., THIRD INTERNATIONAL SYMPOSIUM ON SAN ANTONIO, TX, USA 1-5 FEB. 1997, LOS ALAMITOS, CA, USA,IEEE COMPUT. SOC, US, 1 February 1997 (1997-02-01), pages 24-35, XP010213229 ISBN: 0-8186-7764-3
- OZER E ET AL: "Unified assign and schedule: a new approach to scheduling for clustered register file microarchitectures" MICRO-31. PROCEEDINGS OF THE 31ST. ANNUAL ACM/IEEE INTERNATIONAL SYMPOSIUM ON MICROARCHITECTURE. DALLAS, TX, NOV. 30 - DEC. 2, 1998, PROCEEDINGS OF THE ANNUAL ACM/IEEE INTERNATIONAL SYMPOSIUM ON MICROARCHITECTURE, LOS ALMITOS, CA : IEEE COMP. SOC, US, 30 November 1998 (1998-11-30), pages 308-315, XP010318257 ISBN: 0-8186-8609-X
- VERBAUWHEDE I ET AL: "Low power DSP's for wireless communications" ACM, 26 July 2000 (2000-07-26), pages 303-310, XP010517354

## Description

The invention relates to a data processing system with clustered ILP processor as well as a clustered Instruction Level Parallelism processor.

One main problem in the area of Instruction Level Parallelism (ILP) processors is the scalability of register file resources. In the past, ILP architectures have been designed around centralised resources to cover for the need of a large number of registers for keeping the results of all parallel operation currently being executed. The usage of a centralised register file eases data sharing between functional units and simplifies register allocation and scheduling. However, the scalability of such a single centralised register file is limited, since huge monolithic register files with a large number of ports are hard to build and limit the cycle time of the processor. In particular, adding functional units will lengthen the interconnections and exponentially increase the area and the delay of the register file due to extra register file ports. The scalability of this approach is therefore limited.

Recent developments in the areas of VLSI technologies and computer architectures suggest that a decentralised organisation might be preferable in certain areas. It is predicted that the performance of future processors will be limited by communication restrains rather than computation restrains. One solution to this problem is to portion resources and to physically distribute these resources over the processor to avoid long wires, having a negative effect on communication speed as well as on the latency. This can be achieved by clustering. Many modern microprocessors exploit Instruction Level Parallelism (ILP) in form of the Very Large Instruction Word (VLIW) concept. The clustered VLIW concept was realised in many commercial processors, like HP/STM Lx, TI TMS320C6xxx, Sun MAJC, Equator MAP-CA, BOPS ManArray etc. In a clustered processor resources, like functional units and register files are distributed over separate clusters. In particular for clustered ILP architectures each cluster comprises a set of functional units and a local register file. The clusters operate in lock step under one program counter. The main idea behind clustered processors is to allocate those parts of computation, which interact frequently, on the same cluster, whereas those parts which merely communicate rarely or those communication is not critical are spread over different clusters. However, the problem is how to handle Inter-Cluster-Communication (ICC) on the hardware level (wires and logic) as well as on the software level (allocating variables to registers and scheduling).

The document OZER E ET AL: "Unified assign and schedule: a new approach to scheduling for clustered register file microarchitectures", MICRO-31. PROCEEDINGS OF THE 31ST. ANNUAL ACM/IEEE INTERNATIONAL SYMPOSIUM ON MICROARCHITECTURE. DALLAS, TX, NOV. 30 - DEC. 2, 1998, PROCEEDINGS OF THE ANNUAL ACM/IEEE INTERNATIONAL SYMPOSIUM ON MICROARCHITECTURE, LOS ALMITOS, CA : IEEE COMP. SOC, US, 30 November 1998 (1998-11-30), pages 308-315, XP010318257, ISBN: 0-8186-8609-X describes clustered register file micro-architectures for high performance processors having wide issue widths to exploit high levels of instruction level parallelism (ILP). Wide issue machines require a large number of functional units. Register files are distributed among disjoint sets of functional units, A set of functional units and its associated register file partition is termed a cluster. Each cluster is connected to an interconnection network to allow communication with other clusters.

A known VLIW architecture has a full point-to-point connectivity topology, i.e. each two clusters have a dedicated wiring allowing the exchange of data. On the one hand, the point-to-point ICC with a full connectivity simplifies the instruction scheduling, but on the other hand the scalability is limited due to the amount of wiring needed: N(N-1), with N being the number of clusters. Accordingly, the quadratic growth of the wiring limits the scalability to 2 - 10 clusters. Such an architecture may include four clusters, namely clusters A, B, C and D, which are fully connected to each other. Accordingly, there is always a dedicated direct connection present between any two clusters. The latency of an inter-cluster transfer of data is always the same for every inter-cluster connection independent of the actual distance between the clusters on the chip. The actual distance on the chip between the clusters A and C, and clusters B and D is considered to be longer than the distance between the clusters A and D, A and B, B and C, as well as C and D. Furthermore, pipeline registers may be arranged between each two clusters.

In the above VLIW architecture wire delay problems of the control signals are still present. The control signals are used in order to distribute operation information to the functional units and the register files of the respective clusters. Here, the VLIW instruction is executed in the same cycle. Therefore, all control signals to the respective clusters have to reach these clusters within the same cycle. This imposes a problem for the case that some of these clusters may be arranged on the floor plan of the VLIW processor further apart from an instruction fetch/dispatch unit issuing the control signals to all clusters. In the above case, where clusters D and C are farther away from the clusters A and B as well as from the instruction unit, the processor's cycle time will depend on the time period, required for the control signals from the instruction fetch/dispatch unit to reach the most distant cluster.

Another ICC scheme is the global bus connectivity. The clusters are fully connected to each other via a bus, while requiring much less hardware resources compared to the described above ICC with a full point-to-point connectivity topology. The bus connectivity allows for easy implementation of multicast. The scheme is furthermore based on statical scheduling; hence neither an arbiter nor any control signals for the bus are necessary. ICC bandwidth can be readily increased by adding buses. Moreover, the latency of the ICC will increase due to the propagation delay of the bus. The latency will further increase with increasing numbers of clusters limiting the scalability of the processor with such an ICC scheme. Consequently, the clock frequency may be limited by connecting distant clusters like clusters A and D via a central global bus.

It is therefore an object of the invention to improve the latency problems of instruction and control signals in an ICC scheme for a clustered ILP processor.

This object is solved by a data processing system according to claim 5 and a clustered Instruction Level Parallelism processor according to claim 1.

The invention is based on the idea to specify operations from different cycles in one VLIW instruction and, consequently, to pipeline control connections to remote clusters.

Therefore, a data processing system is provided. Said system comprises a clustered ILP processor having a plurality of clusters each comprising at least one register file and at least one functional unit, as well as an instruction unit for issuing control signals to the clusters of said processor. The instruction unit is connected to each of said clusters via respective control connections. Furthermore, one or more pipeline register(s) can be arranged in said control connections according to the distance between said instruction unit and the clusters.

According to this instruction set architecture higher clock frequencies can be achieved, since the clock period is not limited by the longest delay in control signals due to the longest distance between the instruction unit and the most remote cluster. In other words, longer delays in the control wires to distant clusters can be adopted.

According to a further aspect of the invention the clusters are connected to each other via a point-to-point connection. By this point-to-point inter cluster communication scheme the instruction scheduling is simplified.

In still a further aspect of the invention said clusters are connected to each other via a bus connection. Such an ICC scheme is advantageous, since less hardware resources are required.

In another aspect of the invention the control connections are implemented as a bus.

The invention is also related to a clustered ILP processor comprising a plurality of clusters each having at least one register filed and one functional unit, as well as an instruction unit for issuing control signals to said clusters. Said instruction unit is connected to each of said clusters via respective control connections. One or more additional pipeline register can be arranged in said control connections depending on the distance between said instruction unit and said cluster.

The invention will now be described in more detail with reference to the drawing, in which:
Fig. 1 shows a clustered VLIW architecture according to a first embodiment;
Fig. 2 shows a bus based clustered VLIW architecture according to a second embodiment;
Fig. 3 shows a point-to-point clustered VLIW architecture according to a third embodiment;
Fig. 4 shows a bus based clustered VLIW architecture according to a fourth embodiment;
Fig. 5 shows a pipeline flow chart according to the prior art; and
Fig. 6 shows a pipeline flow chart according to the invention.

Throughout the figures, dashed lines designate control wires, whereas solid lines designate data signal connection.

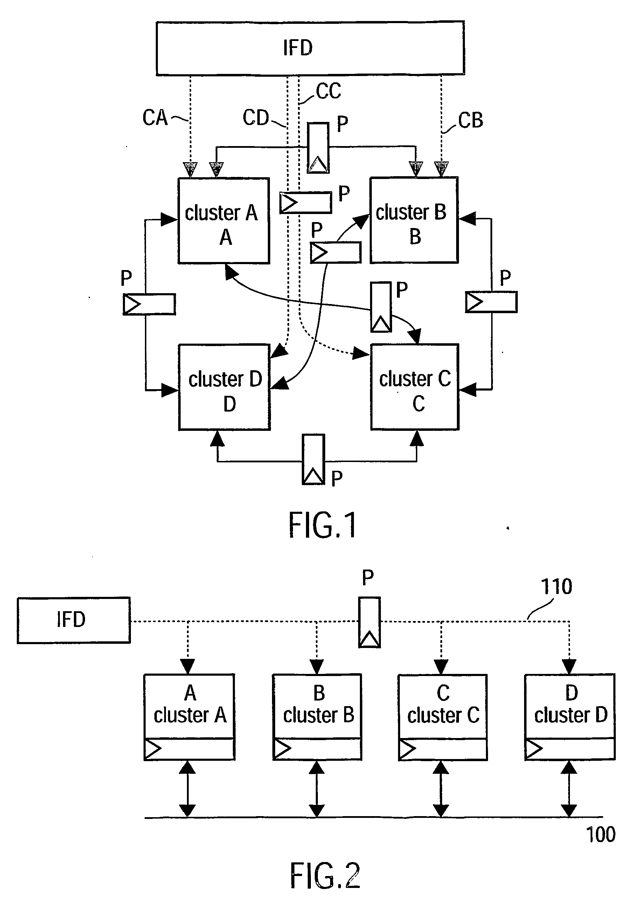

In Fig. 1 a clustered VLIW architecture with a full point-to-point connectivity topology according to a first embodiment is shown. The architecture includes four clusters, namely clusters A, B, C and D, which are fully connected to each other and an instruction fetch/dispatch unit IFD being connected to each cluster A-D via control connections paths CA-CD. Accordingly, there is always a dedicated direct data signal connection present between any two clusters with pipeline registers P arranged between each two clusters. The latency of an inter-cluster transfer of data is always the same for every inter-cluster connection independent of the actual distance between the clusters on the chip. The actual distance on the chip between the clusters A and C, and clusters B and D is considered to be longer than the distance between the clusters A and D, A and B, B and C, as well as C and D. Therefore, a pipeline register P is arranged in the control connection paths CC and CD, in order to pipeline the control signals to remote clusters C, D.

The instructions for a prior art single cluster VLIW processor having two issue slots can be implemented as follows:

| | |
|---|---|
| op1 r1, r2→r3 | nop; |
| nop | op2 r3, r10→11; |

The same operation in a two cluster VLIW processor is implemented as follows:

| | |
|---|---|
| op1 r1, r2→r3 | nop; |
| copy r3→r3[B] nop; | // copy r3 from cluster A to r3 in cluster B |
| nop | op2 r3, r10→11; |

The same code is implemented according to the first embodiment, i.e. cluster D being remote and therefore requires one extra cycle for operation delivering, as follows:

| | |
|---|---|
| op1 r1, r2→r3 | nop; |
| copy r3→r3[D] | op2 r3, r10→11; |

Please note, that this scheduling is valid although op2 is placed in the next VLIW instruction, due to the fact, that op2 will only be executed in cycle 3. Accordingly, operations from different cycles are summarized in one VLIW instruction. The following table 1 shows some instructions for cluster A and cluster D, wherein the cluster D is distant from cluster A.

| Cluster A | Cluster D | |
|---|---|---|
| op1 r1, r2->r3 (*cycle 1*) | op3 (*cycle 2*) | (*instruction 1*) |
| op2 r3->r4; (*cycle 2*) | op5 r3->r4 (*cycle 3*) | (*instruction 2*) |
| op4 r1, r4->r5 (*cycle 3*) | nop (*cycle 4*) | (*instruction 3*) |

Accordingly, instruction 1 comprises op1 and op3, which are executed in cylces 1 and 2, respectively. Instruction 2 comprises op2 and op4, which are executed in cylces 2 and 3, respectively. Instruction 3 comprises op4 and nop, which are executed in cylces 3 and 4, respectively. The execution of operations in the remote cluster D is one cycle behind the operations in the proximate cluster A, i.e. operations executed in the same cycle is a somewhat slanted VLIW instruction.

This instruction set architecture ISA is implemented by pipelining the control connections to the remote clusters D and C. Such an ISA is in particular advantageous for clustered ILP processors, with more than three clusters.

By the implementation of the above ISA the cycle count may be increased because of the extra latency of the control distribution to distant clusters. Furthermore, a slight modification in the instruction schedule being part of a compiler, may be required properly handle the operations in the VLIW instructions according to Fig. 1. Usually, the ICC is implemented by inter-cluster copy operations. An instruction scheduler of the complier determines whether a copy between two operations can be scheduled. Preferably, the compiler for a processor with pipelined control distribution should consider the cycles, in which a consumer operation is executed rather than the VLIW instruction.

Another ICC scheme according to a second embodiment is the global bus connectivity as shown in Fig. 2. The clusters A, B, C, D are fully connected to each other via a bus 100, while requiring less hardware resources compared to the ICC scheme as shown in Fig. 1. The scheme further comprises an instruction fetch/dispatch unit IFD, which is connected to all clusters A-D via a control interconnect 110. A pipeline register P is arranged in the control interconnect 110 between the clusters B and C, wherein the clusters C and D are for any from the clusters A and B. This pipeline register P may require multiple instances in the actual implementation of multiple control signals of a real processor. Accordingly, as in the first embodiment the ISA is implemented by pipelining the control interconnect 110 to remote clusters.

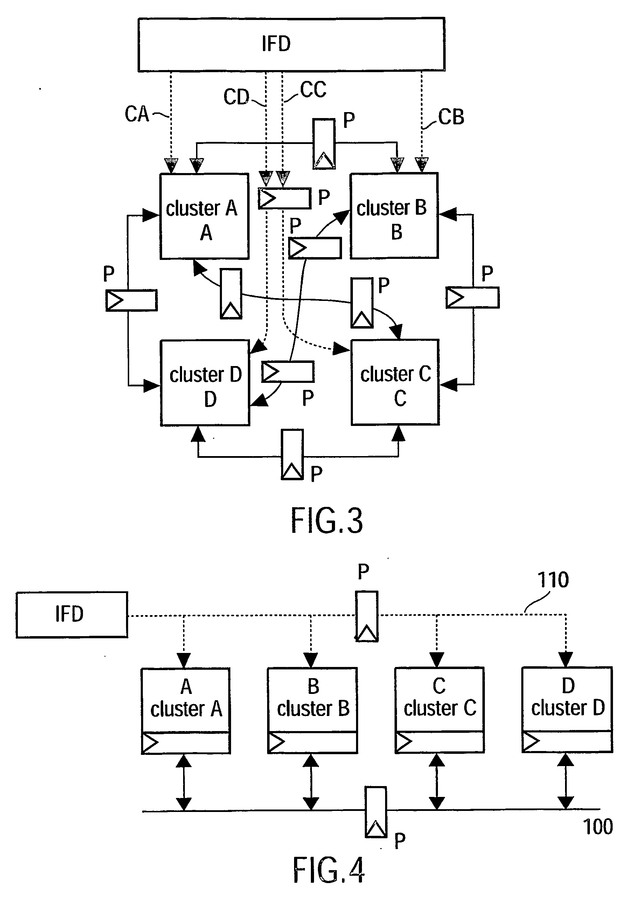

Fig. 3 shows a point-to-point clustered VLIW architecture according to a third embodiment. This architecture is quite similar to the architecture of a clustered VLIW architecture according to Fig. 1. It includes four synchronously run clusters A, B, C and D, which are fully connected to each other via a direct point-to-point connection. Accordingly, there is always a dedicated direct connection present between any two clusters, so that a dead-lock free ICC is provided.

Furthermore, this architecture comprises an instruction fetch/dispatch unit IFD, which is connected to each cluster A-D via control connection paths CA-CD, respectively. The actual distance on the chip between the clusters A and C, and clusters B and D is considered to be longer than the distance between the clusters A and D, A and B, B and C, as well as C and D. One pipeline register P is arranged between the clusters A and B; B and C; C and D and; D and A, while two pipeline registers P are arranged between the remote clusters A and C as well between the remote clusters B and D. Accordingly, the number of pipeline registers P between clusters can be proportional to or dependent on the distance between the respective clusters. Moreover, one or more pipeline register P are arranged in the control path CC and CD. Alternatively one or more pipeline registers P are arranged in each of the control paths CC and CD, in order to pipeline the control signals to remote clusters C, D.

This architecture is a clustered VLIW architecture with a fully connected non-uniform latency inter-cluster network. In particular, the latency of the ICC connections is not uniform, since it depends on the actual distance between the respective clusters on the final layout of the chip. Regarding this aspect the architecture of the present invention differs from the architecture of the clustered VLIW architecture according to Fig. 1. This has the advantage, that wire delay problems are reduced by deeper pipelining inter-cluster connections between remote clusters. The advantages of the VLIW architecture according to the third embodiment over the clustered VLIW architecture according to a first embodiment is that by providing the non-uniform latency the wire delay problems are improved. But on the other hand, the scheduling becomes more complex than for clustered VLIW architecture, since the complier has to schedule the ICC in a network with a non-uniform latency. However, the ISA is implemented as described in the first embodiment with regards to table 1.

Fig. 4 shows a bus based clustered VLIW architecture according to a fourth embodiment of the invention. The architecture of the fourth embodiment is similar to those of the bus-based clustered VLIW architecture according to Fig. 2. Distant clusters, like cluster A and D, are connected to each other via a central or global bus 100. However, this will lead to a limitation of the clock frequency. This disadvantage can be overcome by providing a VLIW architecture as described above according to the first embodiment. In particular, the bus 100 is pipelined, the latencies of inter-cluster communication is made non-uniform and dependent on the distance between the clusters. E.g. if cluster A sends data to cluster B, this will require one cycle, while a data move between cluster A and the remote cluster D require two cycles since the data has to pass the additional pipeline register P arranged between the clusters B and D.

Furthermore, an instruction fetch/dispatch unit IFD is provided, which is connected to each clusters A-D via a control interconnection 110. In particular, a pipeline register P is arranged between clusters B and C, i.e. between the proximate clusters A, B and the distant clusters C, D. However, the instruction scheduling of this bus based clustered VLIW architecture corresponds to the scheduling of the point-to-point based clustered VLIW architecture according to the first embodiment.

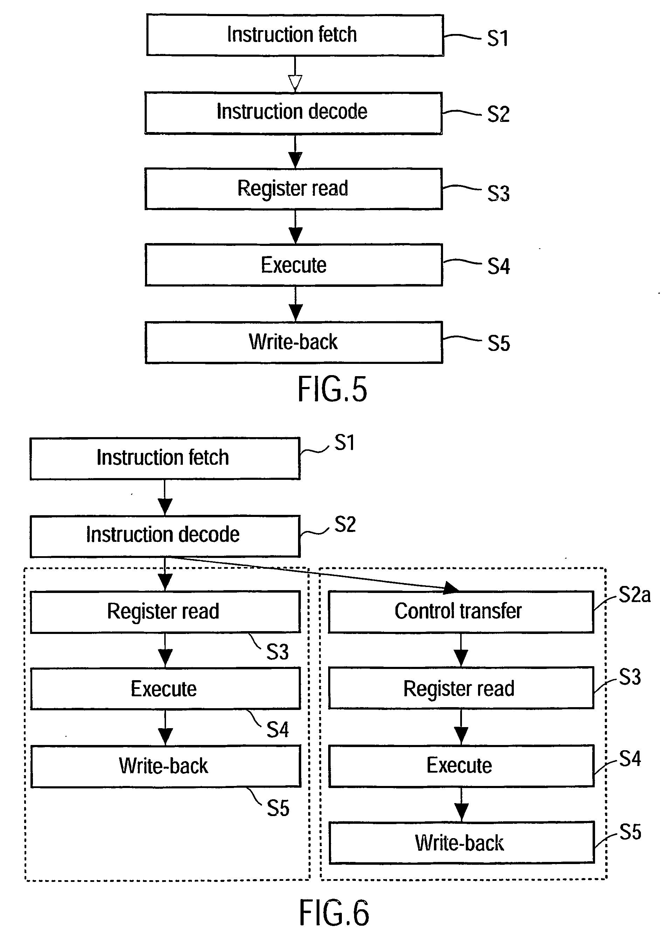

Fig. 5 shows a known pipeline flow chart, which is identical for all clusters. In step S1 an instruction fetch operation and in step S2 an instruction decode operation is performed. A register is read in step S3 and a respective operation is executed in step S4. Finally, a write-back is performed in step S5.

Fig. 6 shows a pipeline flow chart according to principles of the invention. The invention is based on the idea of a pipeline architecture that is different for proximate and remote clusters. Therefore, for the clusters close to the instruction fetch/dispatch unit IFD, the pipeline - implemented by steps S1 -S5 on the left hand side of Fig. 6- is identical to the pipeline according to the prior art, i.e. shown in Fig. 5. However, the pipeline for a remote cluster (on the right hand side of Fig. 6) incorporates an additional pipeline stage for transferring the control signals from IFD to the cluster, i.e. step S2a. Note that the pipeline front-end, including instruction fetch and decode stages steps S1 and S2, is nevertheless shared for proximate and remote clusters. Furthermore, each pipeline stage shown on the figures may contain several sub stages without changing the idea of different pipelines for close and remote clusters.

Please note, the principles of the present invention may be applied to VLIW and EPIC (Explicitly Parallel Instruction Set Computing) processors but not to super-scalar processors, which have a different instruction set architecture.

## Claims

1. A clustered Instruction Level Parallelism processor, comprising a plurality of clusters (A - D) each comprising at least one register file and at least one functional unit;
- an instruction unit (IFD) for issuing control signals to said clusters (A - D), wherein said instruction unit (IFD) is connected to each of said clusters (A - D) via respective control connections (CA - CD), and
**characterized in that** one or more additional pipeline register (P) is arranged in said control connections (CA - CD) depending on the respective distances between said instruction unit (IFD) and said clusters (A - D), the number of additional pipeline registers (P) in a control connection depending on the respective distance.

2. Processor according to claim 1, wherein
said clusters (A - D) are connected to each other via a point-to-point connection.

3. Processor according to claim 1, wherein
said clusters (A - D) are connected to each other via a bus connection (100).

4. Processor according to claim 3, wherein
said control connections (CA - CD) are implemented as a bus (110).

5. Data processing system comprising:
- a clustered Instruction Level Parallelism processor as defined in any of claims 1 to 4.

## Patentansprüche

1. Geclusterter Prozessor für Parallelverarbeitung auf Anweisungsebene, eine Vielzahl von Clustern (A-D) umfassend, von denen jeder zumindest ein Registerfile und zumindest eine Funktionseinheit umfasst;
- eine Befehlseinheit (IFD) für die Ausgabe von Steuersignalen zu den besagten Clustern (A-D), wobei die besagte Befehlseinheit (IFD) mit jedem der besagten Cluster (A-D) über jeweilige Steueranschlüsse (CA-CD) verbunden ist, und
**dadurch gekennzeichnet, dass** ein oder mehrere zusätzliche Pipelineregister (P) in den besagten Steueranschlüssen (CA-CD) angeordnet sind, die von den jeweiligen Abständen zwischen der besagten Befehlseinheit (IFD) und den besagten Clustern (A-D) abhängen, wobei die Anzahl der zusätzlichen Pipelineregister (P) in einem Steueranschluss vom jeweiligen Abstand abhängt.

2. Prozessor nach Anspruch 1, wobei
die besagten Cluster (A-D) über eine Punkt-zu-Punkt-Verbindung miteinander verbunden sind.

3. Prozessor nach Anspruch 1, wobei
die besagten Cluster (A-D) über eine Busverbindung (100) miteinander verbunden sind.

4. Prozessor nach Anspruch 3, wobei
die besagten Steueranschlüsse (CA-CD) als Bus (110) integriert sind.

5. Datenverarbeitungssystem, folgendes umfassend:
einen geclusterten Prozessor für Parallelverarbeitung auf Anweisungsebene nach irgendeinem der Ansprüche 1 bis 4.

## Revendications

1. Processeur de parallélisme de niveau d'instruction en grappes, comprenant une pluralité de grappes (A-D) comprenant chacun au moins un fichier de registre et au moins une unité fonctionnelle ;
- une unité d'instruction (IFD) pour délivrer des signaux de commande auxdites grappes (A-D), dans lequel ladite unité d'instruction (IFD) est connectée à chacune desdites grappes (A-D) via des connexions de commande respectives (CA-CD), et
**caractérisé en ce que** l'on aménage un ou plusieurs registres pipeline supplémentaires (P) dans lesdites connexions de commande (CA-CD) en fonction des distances respectives entre ladite unité d'instruction (IFD) et lesdites grappes (A-D), le nombre de registres pipeline supplémentaires (P) dans une connexion de commande dépendant de la distance respective.

2. Processeur selon la revendication 1, dans lequel :
lesdites grappes (A-D) sont connectées l'une à l'autre via une connexion point à point.

3. Processeur selon la revendication 1, dans lequel :
lesdites grappes (A-D) sont connectées l'une à l'autre via une connexion de bus (100).

4. Processeur selon la revendication 3, dans lequel :
lesdites connexions de commande (CA-CD) sont mises en oeuvre sous la forme d'un bus (110).

5. Système de traitement de données comprenant :
- un processeur de parallélisme de niveau d'instruction en grappes selon l'une quelconque des revendications 1 à 4.
